# EUROPÄISCHE PATENTSCHRIFT

(11) **EP 0 409 817 B1**
(45) Veröffentlichungstag und Bekanntmachung des Hinweises auf die Patenterteilung: **28.04.1993**
(21) Anmeldenummer: 90890210.9
(22) Anmeldetag: 12.07.1990
(51) Int. Cl.: B01D 33/067, B01D 29/23, B01D 29/68

(54) **Filterapparat zur Abtrennung von Fest- und Schwebstoffen aus Flüssigkeiten**
Filtering apparatus for separating solid and suspended matter from liquids
Appareil de filtrage pour séparer des matières solides et suspendues de liquides

(30) Priorität: 18.07.1989 AT 1731/89
(43) Veröffentlichungstag der Anmeldung: 23.01.1991
(73) Patentinhaber: Lenzing Aktiengesellschaft, A-4860 Lenzing (AT)
(72) Erfinder: Klein, Walter, A-4860 Lenzing (AT)
(74) Vertreter: Schwarz, Albin, Dr. Kopecky & Schwarz Patentanwälte

(56) Entgegenhaltungen:
- EP-A- 0 152 973
- DE-A- 3 309 787
- US-A- 4 013 297
- US-A- 4 156 651

## Beschreibung

Die Erfindung betrifft einen Filterapparat zur Abtrennung von Fest- und Schwebstoffen aus Flüssigkeiten, mit einem zylindrischen Gehäuse, einem darin koaxial eingebauten zylindrischen Filterkorb, der einen die zu filtrierende Flüssigkeit aufnehmenden Raum I gegenüber einem äußeren, das Filtrat aufnehmenden Ringraum II abgrenzt, und einer mittels eines Antriebes axial bewegbaren Rückspülvorrichtung, die mindestens eine Kolbenscheibe aufweist, die mit einem Kanal versehen ist, der den äußeren Ringraum II über Perforierungen des Filterkorbes mit einem Hohlraum III eines koaxial zum Filterkorb vorgesehenen und die Kolbenscheibe tragenden Zentralrohres verbindet, wobei die Kolbenscheibe über Dichtungen an der Innenfläche des Filterkorbes anliegt.

Ein Filterapparat dieser Art ist aus der DE-A - 26 29 151 bekannt. Er dient zur Filtration von Viskose, wobei aus dieser schwer filtrierbare Gelteilchen bzw. Rückstände abgetrennt werden. Diese Teilchen werden vom Filtermaterial zurückgehalten. Zur Reinigung des Filtermaterials wird nach Erreichen eines bestimmten Verschmutzungsgrades das Filtermaterial mit bereits filtrierter Flüssigkeit im Gegenstrom gespült, was als sogenannte "Rückspülung" bezeichnet wird.

Die Rückspülflüssigkeit wird bei der bekannten Konstruktion über das axial bewegliche Zentralrohr in ein koaxial zu diesem und ortsfest angeordnetes Sammelrohr geleitet und über dieses abgezogen. Das Zentralrohr ist innerhalb dieses Sammelrohres axial beweglich angeordnet, wobei als Bewegungsantrieb für das Zentralrohr in dieses eine Gewindespindel ragt, die wiederum durch das geschlossene Ende des Sammelrohres nach außen geführt ist und dort an einen Antriebsmotor angeschlossen ist.

Nachteilig bei dieser Konstruktion ist, daß die Rückspülflüssigkeit mit einer Dichtung zwischen dem Zentralrohr und dem Gehäuse des Filterapparates in Berührung gelangt und außerdem die Gewindespindel umgibt und auch die Dichtung zwischen der Gewindespindel und dem Sammelrohr berührt.

Wird der bekannte Apparat zur Filtration und Sichtung von aggressiven oder abrasiven sowie nicht schmierenden Medien eingesetzt, ergibt sich nicht nur ein hoher Verschleiß der von der Rückspülflüssigkeit beaufschlagten beweglichen Teile, sondern auch eine starke Belastung bzw. ein hoher Verschleiß der mit der Rückspülflüssigkeit in Kontakt gelangenden Dichtungen.

Die Erfindung bezweckt die Vermeidung dieser Nachteile und Schwierigkeiten und stellt sich die Aufgabe, einen Filterapparat der eingangs beschriebenen Art zu schaffen, mit dem es möglich ist, solche nicht schmierenden oder aggressiven oder abrasiven Medien, wie z.B. gelöste oder geschmolzene Hochpolymere (Lacke, Dispersionen etc., Acryllösungen), zu filtrieren und trotzdem eine hohe Lebensdauer und eine geringe Störanfälligkeit und Wartungsintensität des Filterapparates zu sichern.

Diese Aufgabe wird erfindungsgemäß dadurch gelöst,
- daß das Zentralrohr mit der Kolbenscheibe und einem in den Hohlraum III des Zentralrohres mündenden Ableitungsrohr für die Rückspülflüssigkeit eine bewegbare Baueinheit bildet,
- daß zwischen dem axial beweglichen Zentralrohr und dem Gehäuse eine dynamische Dichtung vorgesehen ist,
- und daß der Antrieb an dem das Ableitungsrohr tragenden geschlossen ausgebildeten Ende des Zentralrohres außenseitig angreift.

Für bestimmte Einsatzzwecke, z.B. bei Filterung von Flüssigkeiten, die bei Luftkontakt erstarren, ist vorteilhaft die dynamische Dichtung zwischen dem axial beweglichen Zentralrohr und dem Gehäuse von einem einen Spülraum IV bildenden Spülgehäuse umgeben, welches Spülgehäuse gegenüber dem Zentralrohr durch eine weitere dynamische Dichtung abgedichtet ist, wobei zweckmäßig in das Spülgehäuse eine Zu- und Ableitung für eine Spülflüssigkeit münden.

Hierdurch wird eventuell durch die dynamische Dichtung zwischen Gehäuse und Zentralrohr hindurchtretende zu filternde Flüssigkeit vom Zentralrohr verdünnt bzw. abgespült, so daß ein sich am Zentralrohr festsetzender Ansatz, der die Dichtung in Mitleidenschaft ziehen könnte, vermieden wird. Die außenseitig angeordnete dynamische Dichtung zwischen Spülgehäuse und Zentralrohr kann hierdurch nicht mehr mit der zu filtrierenden Flüssigkeit in Kontakt gelangen, so daß diese Dichtung eine besonders hohe Lebensdauer aufweist.

Um den Filterapparat für geschmolzene Hochpolymere, die bei Raumtemperatur erstarrt sind, einsetzen zu können, ist vorteilhaft das Gehäuse des Filterapparates von einem Außenmantel umgeben, der einen das Gehäuse umgebenden Hohlraum bildet, in den eine Zu- und eine Ableitung für ein Heizmedium münden.

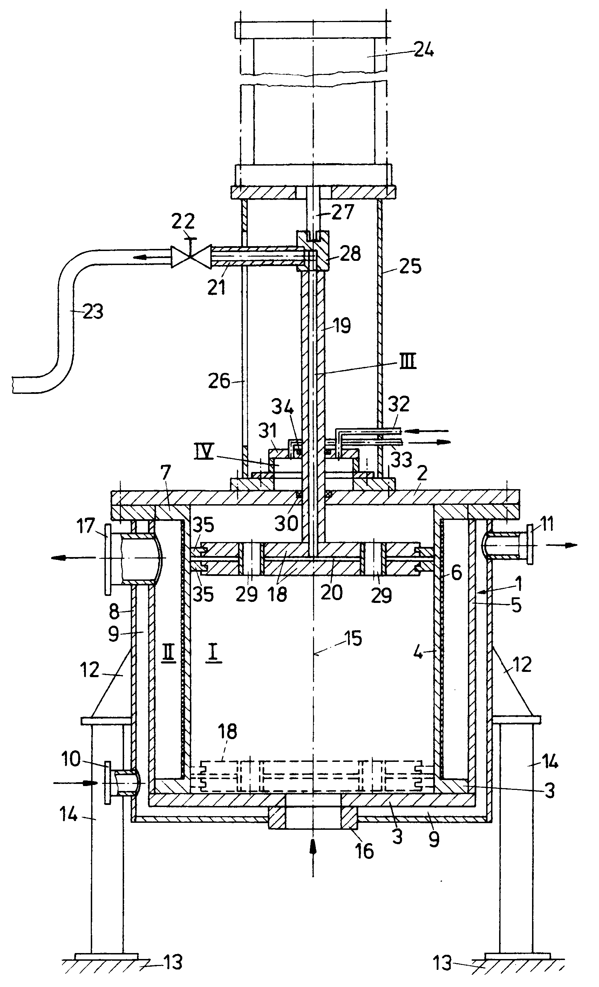

Die Erfindung ist nachfolgend anhand eines in der Zeichnung dargestellten Ausführungsbeispieles näher beschrieben, wobei die Zeichnung einen Axialschnitt durch einen Filterapparat veranschaulicht.

Der in der Zeichnung dargestellte Filterapparat weist ein zylindrisches, stehend angeordnetes Gehäuse 1 auf, das an seinen Enden mit Gehäusedeckeln 2,3 verschlossen ist. Innerhalb des Gehäuses 1 ist ein zylindrischer perforierter Filterkorb 4 vorgesehen, der einen inneren Raum I von einem äußeren Ringraum II zwischen dem Filterkorb 4 und dem Gehäusemantel 5 trennt. Der Filterkorb trägt auf seinem Außenmantel ein Filtermaterial 6, welches durch einen nicht näher dargestellten Spannmantel am Filterkorb 4 festgehalten ist. Der Filterkorb 4 ist am Gehäuse 1 über Ringflansche 7 abgestützt, so daß er koaxial zum Gehäuse 1 ausgerichtet und gehalten ist.

Das Gehäuse 1 ist außen von einem Außenmantel 8 umgeben, der einen das Gehäuse 1 umgebenden Hohlraum 9 bildet. Dieser Hohlraum 9 ist über eine um den Außenmantel 8 angeordnete Zuleitung 10 an ein flüssiges Heizmedium anschließbar, welches durch eine Ableitung 11 abgeleitet wird. Der Außenmantel 8 reicht vom oberen Gehäusedeckel 2 bis über den unteren Gehäusedeckel 3, so daß der untere Gehäusedeckel 3 außen ebenfalls vom Hohlraum 9 umgeben ist. Am Außenmantel sind peripher Stützkonsolen 12 vorgesehen, die auf am Fundament 13 angeordneten Tragsäulen 14 ruhen, so daß das Gehäuse des Filterapparates mit vertikaler Mittelachse 15 gegenüber dem Fundament 13 abgestützt ist.

Am unteren Gehäusedeckel 3 mündet zentral ein Stutzen 16, durch den die zu filtrierende Flüssigkeit in das Gehäuse 1, u.zw. in den inneren Raum I eingeleitet wird. Das Filtrat wird über einen nahe dem oberen Gehäusedeckel 2 angeordneten Abgangsstutzen 17, der den Außenmantel 8 durchsetzt, abgeleitet.

Eine Rückspüleinrichtung ist von einer koaxial zum Gehäuse 1 angeordneten Kolbenscheibe 18 gebildet, die mit einem ebenfalls koaxial angeordneten Zentralrohr 19, welches durch den oberen Gehäusedeckel 2 durch das Gehäuse 1 nach außen geführt ist, starr und flüssigkeitsdicht verbunden ist. Die Kolbenscheibe 18 weist einen Kanal 20 auf, der den äußeren Ringraum II über die Perforierungen des Filterkorbes 4 mit dem Hohlraum III des Zentralrohres 19 leitungsmäßig verbindet.

Am außenseitigen Ende des Zentralrohres 19 ist ebenfalls starr und flüssigkeitsdicht ein Ableitungsrohr 21 montiert, an dem über ein Ventil 22 ein Ableitungsschlauch 23 angeschlossen ist. In das Ableitungsrohr mündet der Hohlraum III des Zentralrohres. Die Kolbenscheibe 18 bildet somit mit dem Zentralrohr 19 und dem Ableitungsrohr 21 eine Baueinheit, die mittels eines Antriebes 24 gegenüber dem Gehäuse 1 bewegbar ist. Der Antrieb 24 ist von einem Druckmittelzylinder gebildet, der über ein Stützrohr 25 am oberen Gehäusedeckel 2 montiert ist. Das Stützrohr 25 weist einen seitlichen Längsschlitz 26 auf, durch den das Ableitungsrohr 21 nach außen ragt.

Die Kolbenstange 27 des Druckmittelzylinders 24 greift außenseitig an einem am Ende des Zentralrohres 19 angeordneten Endstück 28, welches auch das Ableitungsrohr 21 trägt und welches in Achsrichtung des Zentralrohres 19 geschlossen ausgebildet ist, an.

Die Kolbenscheibe 18 weist Durchlässe 29 auf, so daß bei Bewegen der Kolbenscheibe 18 der unterhalb und oberhalb der Kolbenscheibe befindliche Raum I innerhalb des Filterkorbes 4 durch die Kolbenscheibe 18 nicht geteilt wird.

Von besonderer Bedeutung ist die Abdichtung zwischen dem Zentralrohr 19 und dem oberen Gehäusedeckel 2. Hier ist eine dynamische Dichtung 30 eingesetzt, die als Lippenringdichtung ausgebildet ist. Diese Dichtung ist von einem einen Spülraum IV begrenzenden Spülgehäuse 31 umgeben, in das eine Spülmittelzuführung 32 mündet und von dem eine Spülmittelableitung 33 ausgeht. Dieses Spülgehäuse 31 ist wiederum mittels einer in Distanz zur im Gehäusedeckel 2 eingesetzten dynamischen Dichtung 30 angeordneten weiteren dynamischen Dichtung 34, die ebenfalls als Lippenringdichtung ausgebildet ist, gegenüber dem Zentralrohr 19 abgedichtet.

Die Funktion des Filters ist wie folgt:

Die zu filtrierende Flüssigkeit, die über den Stutzen 16 in den Raum I eingeleitet wird, gelangt durch die Perforierungen des Filterkorbes 4 zum Filtermaterial 6, in dem die Feststoffanteile zurückgehalten werden. Die gereinigte Flüssigkeit wird durch das Filtermaterial 6 in den Ringraum II gedrückt und von dort über den Abgangstutzen 17 abgeleitet.

Während der normalen Filtrierung befindet sich die Kolbenscheibe 18 in unterer, strichliert dargestellter Position, in der der Filterkorb 4 mit keinen Perforierungen versehen ist, so daß die Verbindung zwischen dem Ringraum II und dem Hohlraum III des Zentralrohres 19 unterbrochen ist.

Während der Rückspülphase wird die Kolbenscheibe 18 mit gleichmäßiger Geschwindigkeit von unten nach oben und wiederum nach unten bewegt. Während dieses Durchlaufens bleibt die Filtration aufrecht, es wird lediglich ein schmaler ringförmiger Bereich entsprechend der Stärke der Kolbenscheibe 18 für die Filtration abgedeckt. Da im Ringraum II ein höherer Druck als im Kanal 20 der Kolbenscheibe 18 herrscht, wird ein kleiner Teil der bereits filtrierten Flüssigkeit aus dem Ringraum II in diesen Kanal 20 gedrückt, wodurch das Filtermaterial von den angesammelten Feststoffteilchen freigespült wird. Die Rückspülflüssigkeit wird durch den Hohlraum III des Zentralrohres 19, das Ableitungsrohr 21 und den daran angeschlossenen Schlauch 23 abgeleitet. Hierbei ist es wesentlich, daß die Rückspülflüssigkeit mit keinerlei dynamischer Dichtung - mit Ausnahme der zwischen der Kolbenscheibe 18 und dem Filterkorb 4 vorgesehenen, von Kolbenringen 35 gebildeten Dichtung - in Kontakt gelangt.

Die Steuerung des Filterapparates sowie die Ausbildung des Filterkorbes 4 mit seinen Perforierungsöffnungen und die Kolbenscheibendichtung 35 sind vorteilhaft wie bei dem in der EP-B-0 058 656 beschriebenen Filterapparat ausgestaltet.

## Patentansprüche

1. Filterapparat zur Abtrennung von Fest- und Schwebstoffen aus Flüssigkeiten, mit einem zylindrischen Gehäuse (1), einem darin koaxial eingebauten zylindrischen Filterkorb (4), der einen die zu filtrierende Flüssigkeit aufnehmenden Raum (I) gegenüber einem äußeren, das Filtrat aufnehmenden Ringraum (II) abgrenzt, und einer mittels eines Antriebes (24) axial bewegbaren Rückspülvorrichtung, die mindestens eine Kolbenscheibe (18) aufweist, die mit einem Kanal (20) versehen ist, der den äußeren Ringraum (II) über Perforierungen des Filterkorbes (4) mit einem Hohlraum (III) eines koaxial zum Filterkorb (4) vorgesehenen und die Kolbenscheibe (18) tragenden Zentralrohres (19) verbindet, wobei die Kolbenscheibe (18) über Dichtungen (35) an der Innenfläche des Filterkorbes (4) anliegt, dadurch gekennzeichnet,
- daß das Zentralrohr (19) mit der Kolbenscheibe (18) und einem in den Hohlraum (III) des Zentralrohres (19) mündenden Ableitungsrohr (21) für die Rückspülflüssigkeit eine bewegbare Baueinheit bildet,
- daß zwischen dem axial beweglichen Zentralrohr (19) und dem Gehäuse (1) eine dynamische Dichtung (30) vorgesehen ist,
- und daß der Antrieb (24) an dem das Ableitungsrohr (21) tragenden geschlossen ausgebildeten Ende des Zentralrohres (19) außenseitig angreift.

2. Filterapparat nach Anspruch 1, dadurch gekennzeichnet, daß die dynamische Dichtung (30) zwischen dem axial beweglichen Zentralrohr (19) und dem Gehäuse (1) von einem einen Spülraum (IV) bildenden Spülgehäuse (31) umgeben ist, welches Spülgehäuse (31) gegenüber dem Zentralrohr (19) durch eine weitere dynamische Dichtung (34) abgedichtet ist.

3. Filterapparat nach Anspruch 2, dadurch gekennzeichnet, daß in das Spülgehäuse (31) eine Zu- und Ableitung (32, 33) für eine Spülflüssigkeit münden.

4. Filterapparat nach einem oder mehreren der Ansprüche 1 bis 3, dadurch gekennzeichnet, daß das Gehäuse (1) des Filterapparates von einem Außenmantel (8) umgeben ist, der einen das Gehäuse (1) umgebenden Hohlraum (9) bildet, in den eine Zu- und eine Ableitung (10, 11) für ein Heizmedium münden.

## Claims

1. A filter apparatus for the separation of solids and suspended matter from liquids, having a cylindrical housing (1), a cylindrical filter basket (4) installed coaxially therein, which defines a chamber (I) containing the liquid to be filtered with respect to an outer annular space (II) containing the filtrate, and a backwash device, which can be axially moved by means of a drive unit (24), and which comprises at least one plunger disk (18), which is provided with a duct (20), which connects the outer annular space (II) via perforations in the filter basket (4) with a hollow space (III) in a central pipe (19) provided coaxially to the filter basket (4) and supporting the plunger disk (18), the plunger disk (18) abutting the internal surface of the filter basket (4) via seals (35),
**characterised**
- **in that** with the plunger disk (18) and an outlet pipe (21) for the backwash fluid opening into the hollow space (III) in the central pipe, the central pipe (19) forms a movable structural unit,
- **in that** a dynamic seal (30) is provided between the axially movable central pipe (19) and the housing (1),
- **and in that** the drive unit (24) acts on the outside of the end of the central pipe (19), which supports the outlet pipe (21) and has a closed construction.

2. A filter apparatus according Claim 1,
**characterised in that** the dynamic seal (30) between the axially movable central pipe (19) and the housing (1) is surrounded by a flushing housing (31) forming a flushing chamber (IV), said flushing housing (31) being sealed with respect to the central pipe (19) by a further dynamic seal (34).

3. A filter apparatus according to Claim 2,
**characterised in that** a supply line and a delivery line (32, 33) for flushing liquid open into the flushing housing (31).

4. A filter apparatus according to one or more of Claims 1 to 3,
**characterised in that** the housing (1) of the filter apparatus is surrounded by an outer shell (8), which forms a hollow space (9) surrounding the housing (1), into which a supply line and a delivery line (10, 11) for a heating medium open.

## Revendications

1. Appareil de filtration pour la séparation de matières solides et en suspension d'avec des liquides, comportant un boîtier cylindrique (1), un panier filtrant cylindrique (4) monté coaxialement à l'intérieur, qui délimite une cavité (I), qui reçoit le liquide à filtrer, par rapport à une cavité annulaire (II) qui reçoit le filtrat, et un dispositif de lavage à contre-courant déplaçable axialement au moyen d'un dispositif d'entraînement (24), qui présente au moins un piston en forme de disque (18) qui est muni d'un canal (20) qui relie la cavité annulaire externe (II) par l'intermédiaire de perforations du panier filtrant (4) à une cavité (III) d'un tube central (19) prévu coaxialement au panier filtrant (4) et portant le piston en forme de disque (18), le piston en forme de disque (18) reposant par l'intermédiaire de garnitures d'étanchéité (35) sur la surface interne du panier filtrant (4), caractérisé :
- en ce que le tube central (19) forme une unité structurale mobile avec le piston en forme de disque (18) et un tube d'évacuation (21) pour le liquide de lavage à contre-courant qui débouche dans la cavité (III) du tube central (19),
- en ce qu'il est prévu une garniture d'étanchéité dynamique (30) entre le tube central (19) déplaçable axialement et le boîtier (1),
- et en ce que le dispositif d'entraînement (24) agit de l'extérieur sur l'extrémité fermée du tube central (19) qui porte le tube d'évacuation (21).

2. Appareil de filtration selon la revendication 1, caractérisé en ce que la garniture d'étanchéité dynamique (30) entre le tube central (19) déplaçable axialement et le boîtier (1) est entourée par un boîtier de lavage (31) qui forme une cavité de lavage (IV), ce boîtier de lavage (31) étant étanchéifié par rapport au tube central (19) par une autre garniture d'étanchéité dynamique (34).

3. Appareil de filtration selon la revendication 2, caractérisé en ce qu'une conduite d'amenée et une conduite d'évacuation (32, 33) pour un liquide de lavage débouchent dans le boîtier de lavage (31).

4. Appareil de filtration selon une ou plusieurs des revendications 1 à 3, caractérisé en ce que le boîtier (1) de l'appareil de filtration est entouré par une enveloppe externe (8) qui forme une cavité (9) qui entoure le boîtier (1) et dans laquelle débouchent une conduite d'amenée et une conduite d'évacuation (10, 11) pour un agent chauffant.
